(19) Europäisches Patentamt
European Patent Office
Office européen des brevets

(11) Veröffentlichungsnummer: **0 285 968**
**A2**

# (12) EUROPÄISCHE PATENTANMELDUNG

(21) Anmeldenummer: **88105026.4**

(51) Int. Cl.[4] **C08L 51/04 , C08L 57/00**

(22) Anmeldetag: **29.03.88**

(30) Priorität: **07.04.87 DE 3711684**

(43) Veröffentlichungstag der Anmeldung:
**12.10.88 Patentblatt 88/41**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Bruessau, Rudolf Dr.**
**Max-Beckmann-Strasse 8 d**
**D-6710 Frankenthal(DE)**
Erfinder: **Wagner, Daniel, Dr.**
**Prof.-Dillinger-Weg 44**
**D-6702 Bad Duerkheim(DE)**

## (54) Verfahren zur Herstellung einer thermoplastischen Formmasse und Formteile aus dieser.

(57) Verfahren zur Herstellung einer thermoplastischen Formmasse, enthaltend, jeweils bezogen auf A + B.

A 2 bis 98 Gew.% eines modifizierten thermoplastischen Harzes

B 98 bis 2 Gew.% einer polymeren Komponente durch Umsetzung der Komponente A mit B in einer üblichen Mischvorrichtung bei Temperaturen von 150 bis 250°C in Abwesenheit von Initiatoren, Abkühlen und Gewinnung des Wertproduktes, dadurch gekennzeichnet, daß als modifiziertes thermoplastisches Harz A das Umsetzungsprodukt aus

$a_1$) 80 bis 99,95 Gew.%, bezogen auf A, eines nitril-und phenylgruppenhaltigen Copolymerisates als Basispolymerem

und

$a_2$) 0,05 bis 20 Gew.%, bezogen auf A, einer $\alpha,\beta$-ungesättigten Dicarbonylverbindung

oder

$a_3$) 0,05 bis 20 Gew.%, bezogen auf A, mindestens eines ethylenisch ungesättigten Monomeren mit mindestens einer Epoxid-und/oder Hydroxidgruppe oder eines Gemisches dieser Monomeren und als polymere Komponente B ein durch anionische Polymerisation erzeugtes, mindestens eine funktionelle (reaktionsfähige) Gruppe aufweisendes thermoplastisches Homo-oder Copolymerisat verwendet wird.

EP 0 285 968 A2

Xerox Copy Centre

## Verfahren zur Herstellung einer thermoplastischen Formmasse und Formteile aus dieser

Die Erfindung betrifft ein Verfahren zur Herstellung einer thermoplastischen Formmasse, enthaltend, jeweils bezogen auf A + B,

A 2 bis 98 Gew.% eines modifizierten thermoplastischen Harzes

B 98 bis 2 Gew.% einer polymeren Komponente durch Umsetzung der Komponente A mit B in einer üblichen Mischvorrichtung bei Temperaturen von 150 bis 250°C in Abwesenheit von Initiatoren, Abkühlen und Gewinnung des Wertproduktes.

Zum Stand der Technik nennen wir:

(1) US-PS 3 661 886

(2) deutsche Patentanmeldung P 36 15 853.4

(3) DE-OS 34 44 788

In (1) sind modifizierte Polystyrole beschrieben, bei denen Polystyrol mit Maleinsäureanhydrid unter Verwendung von 0.1 bis 5 Mol eines Radikalbildners, bezogen auf 1 Mol Styrol, basierend auf die Monomereinheit Styrol, umgesetzt wird. Nachteilig ist der starke Abbau des Molekulargewichts des Polystyrols.

In (2) werden nitrilgruppenfreie Styrolpolymerisate beschrieben, die mit ungesättigten $\alpha,\beta$-Dicarbonylverbindungen umgesetzt werden.

In (3) sind thermoplastische Formmassen auf Basis von Kammpolymeren und ein Verfahren zu deren Herstellung beschrieben. Die Hauptketten der Kammpolymeren enthalten z.B. Styrol und Acrylnitril, die Seitenketten enthalten auf anionischem Wege erhaltene (Co)Polymerisate. Die Herstellung dieser Kammpolymere ist aufwendig und läßt bezüglich der Ausbeute zu wünschen übrig.

Es bestand daher die Aufgabe ein Verfahren zur Herstellung einer thermoplastischen Formmasse auf Basis von nitril-und phenylgruppenhaltigen Copolymerisaten bereitzustellen, das frei von den genannten Mängeln ist, das einfach ist und wobei Verfahrensprodukte gut verträglich mit anderen Polymerisaten sind.

Der Vorteil des erfindungsgemäßen Verfahrens besteht insbesondere auch darin, daß beliebige Thermoplaste, z.B. alle gängigen Handelsprodukte auf Basis von ABS und ASA, in einfacher Weise modifiziert und als Ausgangspropdukte für das erfindungsgemäße Verfahren verwendet können.

Die Aufgabe wird gelöst durch ein Verfahren gemäß Patentanspruch 1.

Die Erfindung betrifft daher ein Verfahren zur Herstellung einer thermoplastischen Formmasse, enthaltend, jeweils bezogen auf A + B,

A 2 bis 98 Gew.% eines modifizierten thermoplastischen Harzes

B 98 bis 2 Gew.% einer polymeren Komponente durch Umsetzung der Komponente A mit B in einer üblichen Mischvorrichtung bei Temperaturen von 150 bis 250°C in Abwesenheit von Initiatoren, Abkühlen und Gewinnung des Wertproduktes.

Dieses Verfahren ist dadurch gekennzeichnet, daß als modifiziertes thermoplastisches Harz A das Umsetzungsprodukt aus

$a_1$) 80 bis 99,95 Gew.%, bezogen auf A, eines nitril-und phenylgruppenhaltigen Copolymerisates als Basispolymerem

und

$a_2$) 0,05 bis 20 Gew.%, bezogen auf A, einer $\alpha,\beta$-ungesättigten Dicarbonylverbindung

oder

$a_3$) 0,05 bis 20 Gew.%, bezogen auf A, mindestens eines ethylenisch ungesättigten Monomeren mit mindestens einer Epoxid-und/oder Hydroxidgruppe oder eines Gemisches dieser Monomeren und als polymere Komponente B ein durch anionische Polymerisation erzeugtes, mindestens eine funktionelle (reaktionsfähige) Gruppe aufweisendes thermoplastisches Homo-oder Copolymerisat verwendet wird.

Nachstehend werden das erfindungsgemäße Verfahren und die zu seiner Durchführung erforderlichen Ausgangsstoffe (Komponenten A + B) beschrieben.

### Komponente A

Als Komponente A dient in der Regel ein modifiziertes Harz A, das das Umsetzungsprodukt der Komponenten $a_1$ und $a_2$ oder $a_3$ darstellt.

Unter nitril-und phenylgruppenhaltigem Copolymerisat $a_1$ im Sinne dieser Erfindung wird einmal das

Copolymerisat selbst, aber auch seine Abmischung mit gepfropften Butadien-oder Acrylatkautschuken und gegebenenfalls üblichen Hilfsmitteln verstanden.

Das Copolymerisat $a_1$ selbst besteht im allgemeinen aus mindestens 50 Gew.%, bezogen auf das Copolymerisat, eines vinylaromatischen Monomeren mit 8 bis 12 C-Atomen, wie α-Methylstyrol, para-Methylstyrol, oder insbesondere Styrol selbst und einem nitrilgruppenhaltigen, ethylenisch ungesättigten Monomeren mit 3 bis 6 C-Atomen, insbesondere Acrylnitril oder Methacrylnitril. Es enthält bevorzugt 15 bis 40, insbesondere 20 bis 38 Gew.%, bezogen auf das Copolymerisat, der einpolymerisierten Nitrilmonomeren. Es kann ferner noch bis zu 10 Gew.%, bezogen auf das Copolymerisat, Monomere wie Methacrylsäureester, Acrylsäureester, z.B. Methylmethacrylat oder Ethylmethacrylat, Butylacrylat oder 2-Ethylhexylacrylat sowie Methacrylamide oder Acrylamide oder Gemische dieser Verbindungen einpolymerisiert enthalten. Vorzugsweise werden jedoch nur SAN-Copolymerisate angewendet.

Diese SAN-Copolymerisate sind an sich bekannt und im Handel erhältlich. Sie werden in üblicher Weise in Lösung, Emulsion oder Masse kontinuierlich oder diskontinuierlich hergestellt. Die Durchschnittsmolekulargewichte (Gewichtsmittel $\overline{M}_w$), bestimmt durch Gelpermeationschromatographie, liegen im allgemeinen zwischen 10.000 und 1 Million.

Zur Schlagzähmodifizierung wird dem SAN-Copolymerisat vorzugsweise ein gepfropfter Butadien-oder Acrylatkautschuk zugesetzt sein, und zwar in Mengen von 60 bis 140, bevorzugt 80 bis 120 Gew.-Teile, bezogen auf 100 Gew.-Teile des SAN-Copolymerisates.

Diese bevorzugten schlagzähmodifizierten SAN-Copolymerisate, die im Sinne dieser Erfindung als ABS-und ASA-Polymerisate bezeichnet werden, sind an sich bekannt, z.B. aus den europäischen Patentanmeldungen Nr. 86105517.6 und 86105520.0, außerdem sind sie im Handel erhältlich.

Der an sich bekannte gepfropfte Butadienkautschuk stellt ein Pfropfmischpolymerisat aus einem Butadien-Polymerisat als elastomere Pfropfgrundlage, das eine Glastemperatur von unter 0°C (nach K.H. Illers und H. Breuer, Kolloidzeitschrift 176 (1961) 110), z.B. Polybutadien, und einer Pfropfhülle dar.

Das Pfropfmischpolymerisat ist im allgemeinen aufgebaut aus 20 bis 70, bevorzugt 40 bis 70, insbesondere 55 bis 65 Gew.% der Pfropfgrundlage und 30 bis 80, bevorzugt 30 bis 60, insbesondere 35 bis 45 Gew.%, jeweils bezogen auf das Pfropfmischpolymerisat der Pfropfhülle. Diese enthält ihrerseits etwa 60 bis 80 Gew.% eines vinylaromatischen Monomeren wie Styrol und etwa 20 bis 40 Gew.%, jeweils bezogen auf die Pfropfhülle, eines anderen ethylenisch ungesättigten Monomeren wie Acrylnitril einpolymerisiert, wobei das Acrylnitril auch zur Hälfte durch Methylmethacrylat ersetzt sein kann.

Der an sich bekannte gepfropfte Acrylatkautschuk unterscheidet sich vom Butadienkautschuk dadurch, daß als elastomere Pfropfgrundlage üblicherweise ein Polymerisat aus Acrylestern, z.B. n-Butylacrylat oder 2-Ethylhexylacrylat, und gegebenenfalls geringen Mengen anderer copolymerisierbarer Monomerer, verwendet wird, das im allgemeinen mit Hilfe von mehrfunktionellen Monomeren, wie Divinylbenzol oder Di-hydro-di-cyclo-pentadienylacrylat, vernetzt ist.

Sowohl die Kautschuke als auch die Pfropfmischpolymerisate werden üblicherweise in Emulsion oder in Lösung hergestellt, wobei die Pfropfung auch in bekannter Weise in mehreren Stufen erfolgen kann. Es entstehen Pfropfmischpolymerisate, bei denen die Pfropfhülle in dem Fachmann bekannten Grenzen auf die elastomere Grundlage gepfropft ist. Die Teilchengrößen der Pfropfmischpolymerisate können den Erfordernissen entsprechend nach bekannten Methoden bestimmt und eingestellt werden, z.B. bei der Emulsionspolymerisation mit Hilfe eines Saatlatex oder eines anschließenden Agglomerationsschrittes.

Üblicherweise sollte die mittlere Teilchengröße ($d_{50}$-Wert der integralen Massenverteilung, bestimmt nach der in BE-PS 829 810 beschriebenen Methode oder durch klassifizierende Auszählung der Teilchen in elektronenmikroskopischen Aufnahmen und Umrechnung auf die Massenverteilung) zwischen 0,1 und 1 µm bei Pfropfmischpolymerisaten, die in bekannter Weise in Emulsion hergestellt wurden, liegen oder zwischen 0.5 und 10 µm bei Produkten, die in bekannter Weise in Lösung hergestellt wurden.

Gegebenenfalls kann das Copolymerisat $a_1$ übliche Hilfsmittel in Mengen bis zu 45 Gew.-Teilen, bevorzugt weniger als 1 Gew.-Teil, bezogen auf 100 Gew.-Teile des Copolymerisates $a_1$, enthalten. Es kommen dabei bekannte Verarbeitungshilfsmittel in den dem Fachmann bekannten Mengen in Betracht, die entweder für die Herstellung der Komponente $a_1$ oder deren Verarbeitung üblich sind, z.B. Mineralöle, Silikonöle oder andere Gleit-und Entformungsmittel.

Zur Herstellung des modifizierten Harzes wird die Komponente $a_1$ im allgemeinen in Mengen von 80 bis 99,95, bevorzugt 90 bis 99,9, insbesondere 95 bis 99,8 Gew.%, bezogen auf die Komponente A, als Basispolymeres bei der Umsetzung mit 0,05 bis 20, bevorzugt 0,1 bis 10, insbesondere 0,2 bis 5 Gew.%, bezogen auf die Komponente A, der Verbindung $a_2$ verwendet.

Bei der Komponente $a_2$ handelt es sich um α,β-ungesättigte Dicarbonylverbindungen, bevorzugt solche der allgemeinen Formel I

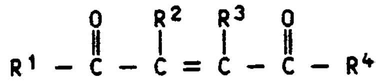 I

$R^1$, $R^4$ -OH, -O-$C_1$-$C_{25}$-Alkyl, -O-$C_7$-$C_{25}$-Aralkyl, -O-Aryl, -$NR^5R^6$ oder gemeinsam -O-oder -$NR^5$-
$R^2$ -H, oder, wenn $R^3$ -H ist, Chlor, -$C_1$-$C_{25}$-Alkyl oder -Aryl,
$R^3$ -H, oder, wenn $R^2$ -H ist, Chlor, -$C_1$-$C_{25}$-Alkyl oder -Aryl,
$R^5$, $R^6$ -H, -$C_1$-$C_{25}$-Alkyl, $C_7$-$C_{25}$-Aralkyl oder Aryl, die ihrerseits durch $C_1$-$C_4$-Alkyl oder -Alkoxy substituiert sein können, bedeuten.

Die Substituenten müssen, was sich allerdings von selbst versteht, so beschaffen sein, daß sie die Modifizierungsreaktion nicht verhindern. Es handelt sich daher im allgemeinen um α,β-ungesättigte Dicarbonsäuren, deren Anhydride, Imide, um Monoester oder Monoamide dieser Dicarbonsäuren, ihre Diester oder Diamide.

Als Beispiele für Dicarbonsäuren seien Maleinsäure, Fumarsäure, Chlormaleinsäure, Methylmaleinsäure und Butenylbernsteinsäure genannt, von denen Fumarsäure besonders bevorzugt wird.

Als Anhydride seien beispielhaft erwähnt Maleinsäureanhydrid, Methylmaleinsäureanhydrid und Chlormaleinsäureanhydrid.

Bevorzugte Imide leiten sich von der Maleinsäure ab. Die Substituenten $R^2$, $R^3$ und $R^5$ sind dabei Alkylgruppen mit 1 bis 4 C-Atomen, beispielsweise Methyl-, Ethyl-oder n-, i-oder t-Butyl, Cycloakylgruppen mit bis zu 8 C-Atomen oder Phenylgruppen, die gegebenenfalls alkylsubstituiert sein können. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Bevorzugte Halbester und Halbamide leiten sich von der Maleinsäure ab.

Die Halbester leiten sich bevorzugt von primären und sekundären Monoalkoholen, wie Methanol, Ethanol, n-und i-Propanol, n-und i-Butanol, Pentanole, Hexanole, Heptanole, Octanole, z.B. 2-Ethylhexylalkohol und höheren Alkoholen wie Dodecanole und cycloaliphatische Alkohole, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen. Als Amine zur Herstellung der erfindungsgemäß eingesetzten Halbamide seien ganz allgemein sekundäre Amine und N-Alkylaniline genannt. Beispiele hierfür sind N-Methyl-oder N-Ethylalkylamine oder N-Methylanilin. Ganz allgemein werden Halbester den Halbamiden vorgezogen.

Das modifizierte Harz A (Komponente A) kann aber auch durch Umsetzen von 80 bis 99,95, bevorzugt 90 bis 99,9, insbesondere 95 bis 99,8 Gew.%, bezogen auf die Komponente A, des Copolymerisats $a_1$ als Basispolymerem mit 0,05 bis 20, bevorzugt 0,1 bis 10, insbesondere 0,2 bis 5 Gew.%, bezogen auf die Komponente A, des Monomeren $a_3$ gewonnen werden.

Als Epoxidgruppen-haltiges ethylenisch ungesättigtes Monomeres $a_3$ ist prinzipiell jede polymerisierbare Verbindung geeignet, die mindestens eine Epoxidgruppe im Molekül aufweist.

In Betracht kommen unter anderem Monomere, die zusätzlich zu mindestens einer Epoxigruppe

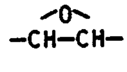

eine Vinylbenzol-, Acryloyl-, Methacryloyl-, Acrylamido-oder Methacrylamidogruppe enthalten. Beispielsweise können Glycidylacrylat und Glycidylmethacrylat sowie auch Glycidylallyl-und Vinylether verwendet werden.

Als $a_3$ kommen aber auch ethylenisch ungesättigte Monomere mit mindestens einer Hydroxidgruppe in Betracht. Es kann sich dabei um Verbindungen der allgemeinen Formel II

$CH_2=CR^7$-F-OH II

handeln, wobei

$R^7$ insbesondere Wasserstoff oder Methyl, aber auch $C_2$-$C_{25}$-Alkyl und

F 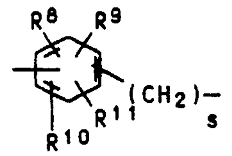 , $-\overset{O}{\overset{\|}{C}}-O-B-$ , $-\overset{O}{\overset{\|}{C}}-NR^7-B-$ ,

daneben auch

$-\underset{O}{\underset{\|}{C}}-O-CH_2-\underset{OH}{\underset{|}{CH}}-CH_2-$ oder $-\overset{O}{\overset{\|}{C}}-O-CH_2-\underset{Cl}{\underset{|}{CH}}-CH_2-$ ,

$R^8$ bis $R^{11}$ Wasserstoff oder Methyl, daneben auch $C_2$-$C_8$-Alkyl, Halogen, CN
s eine ganze Zahl von 0 bis 6, insbesondere 0 bis 2 und
B ein Brückenglied ist.

Als Brückenglied B kommt insbesondere $C_1$-$C_4$-Alkyliden, aber auch $C_5$-$C_{25}$-Alkyliden, $C_6$-$C_{12}$-Cycloalkyliden,

$$-(CH_2)_j-O-[-\underset{O}{\underset{\|}{C}}(CH_2)_5-]_k- ,$$

wobei j = 2 bis 10 und k = 1 bis 10 ist,

$$-(CH_2-CH_2-O-)_h-CH_2-CH_2- ,$$

$$-(CH_2-\underset{CH_3}{\underset{|}{CH}}-O)_h-CH_2-\underset{CH_3}{\underset{|}{CH}}- \quad \text{oder}$$

$$-(CH_2-CH_2-O-)_h-(CH_2-\underset{CH_3}{\underset{|}{CH}}-O-)_i-CH_2-\underset{R^{12}}{\underset{|}{C}}- ,$$

wobei h, i = 1, 2 oder 3 bis 20 und $R^{12}$ = H oder $CH_3$ ist,

in Betracht.

Besonders bevorzugte Verbindungen sind Hydroxipropylenacrylat, Vinylbenzylalkohol oder Glycidylmethacrylat (GMA), insbesondere für die Modifizierung von ABS und ASA.

Es können auch Monomere, die sowohl eine Epoxid-und eine Hydroxigruppe tragen und auch Gemische von Epoxid-und Hydroxidgruppen tragenden Monomere als $a_3$ verwendet werden.

Bei der Umsetzung der Basispolymeren $a_1$ mit den Monomeren $a_2$ und $a_3$ können bis zu 20 Gew.-Teile, bezogen auf 100 Gew.-Teile von A, an Radikalstartern eingesetzt werden.

Der Anteil der Radikalstarter ist in der Regel geringer als die Summe der verwendeten monomeren Verbindungen $a_2$ bzw. $a_3$. Im allgemeinen handelt es sich dabei um ein organisches Peroxid oder eine Azo-Verbindung. Verwendet werden organische Peroxide mit einer Halbwertzeit im Bereich von 1 bis 30 sec. bei 200°C. Die Wahl des Radikalstarters richtet sich nach der gewünschten Reaktionstemperatur. Beispielsweise seien als Radikalstarter tert.-Butylperoxid und Dicumylperoxid genannt.

Häufig hat es sich als vorteilhaft erwiesen, in Abwesenheit oder praktischer Abwesenheit von Radikalstartern zu arbeiten. Dies gilt insbesondere dann, wenn als Komponente $a_2$) Fumarsäure eingesetzt wird, da hier bei der Verwendung von Radikalstartern unter Umständen unerwünschte Nebenreaktionen auftreten können.

Zur Modifizierung können die Komponenten $a_1$ bei 120 bis 280°C, vorzugsweise 140 bis 240°C, mit den Monomeren $a_2$ und $a_3$ umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0.5 bis 30 min., vorzugsweise von 1 bis 3 min.

Besonders gut hierfür eignet sich ein Zweischneckenextruder, der in bekannter Weise, wie in der deutschen Patentanmeldung P 36 15 853.4 beschrieben, mit Knetelememten ausgerüstet sein kann.

Nachstehend wird eine besonders bevorzugte Verfahrensvariante für die Herstellung des modifizierten

Harzes beschrieben.

Die Komponenten werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Komponente B

Sie stellt im Sinne der vorliegenden Erfindung ein thermoplastisches Harz, insbesondere ein Homo-oder Copolymerisat, dar, das auch elastomer sein kann und durch anionische Polymerisation erzeugt wird, wobei bei der Herstellung mindestens eine funktionelle Gruppe, vorzugsweise eine Endgruppe, eingebaut wird.

Als funktionelle Endgruppen eignen sich Isocyanate, Säuren bzw. Säurederivate, Epoxide, Phenole, Alkohole, Amine, Thiole und andere, der polymeranalogen Reaktion zugänglichen Gruppen an, wie dies in E.M. Fetters, "Chemical Reactions on Polymers", Intersclenced Publishers, New York, 1970, beschrieben ist. Brauchbar sind durch anionische Polymerisation hergestellte Polymere, die eine terminale primäre oder sekundäre Hydroxylgruppe tragen. Diese erhält man in an sich bekannter Weise durch Umsetzung des lebenden Anions mit Ethylenoxid, Propylenoxid oder einem Aldehyd, wie Propionaldehyd als Abbruchmittel.

Die durch anionische Polymerisation erhältlichen (Co)Polymeren B sind dem Fachmann bekannt. Besonders bevorzugt sind Polymere, die aus den Monomeren Butadien, Isopren, 2,3-Dimethylbutadien, Styrol oder deren Gemischen gebildet werden. Die anionische Polymerisation wird bekanntermaßen vorzugsweise durch Organo-Lithiumverbindungen, wie n-oder sec.-Butyllithium, gestartet. Die anionischen Polymeren können gegebenenfalls hydrierte Homopolymere oder Copolymere sein. Die Copolymeren können dabei statistisch oder blockartig aufgebaut sein. Die blockartig aufgebauten Polymeren zeichnen sich durch anwendungstechnisch interessante Eigenschaften aus, da durch Ausbildung von Mikrodomänen z.B. thermoplastische Elastomere erhalten werden können.

Besonders bevorzugt werden Homopolymerisate aus Butadien, Isopren oder Styrol oder Copolymerisate aus Butadien und Isopren und insbesondere solche aus Styrol und Dien, wobei der Anteil an Styrol 10 bis 90 Gew.% (Rest Dien) betragen kann. Die genannten Homo-oder Copolymerisate können linear oder radial aufgebaut sein, wobei bei Anwendung verschiedener Monomerer diese blockartig oder statistisch angeordnet sein können. Die Molekulargewichte $\overline{M}_n$ dieser (Co)Polymersiate liegen im Bereich von 1 000 bis 2 000 000, insbesondere von 2 000 bis 200 000.

Die (Co)Polymerisate weisen als funktionelle Endgruppe bevorzugt Carboxylgruppen der Formel

$$-COOM$$

$$-CH_2-CH_2-O-\underset{\underset{O}{\|}}{C}-CH_2CH_2COOM$$

$$-CH_2-\underset{\underset{CH_3}{|}}{C}-O-\underset{\underset{O}{\|}}{C}-CH_2CH_2COOM$$

auf, in denen M steht für: H, $NH_4$, Na, K, Li, Ca, Mg, vorzugsweise für H.

Für die Reaktion des modifizierten Harzes A (Komponente A) mit dem eine funktionelle Endgruppe aufweisenden (Co)Polymerisat (Komponente B) werden angewendet:

A: 2 bis 98 Gew.%, vorzugsweise 20 bis 80 Gew.%, insbesondere 30 bis 70 Gew.%,

B: 98 bis 2 Gew.%, vorzugsweise 80 bis 20 Gew.%, insbesondere 70 bis 30 Gew.%.

Bei dieser Umsetzung können, wenn dies nicht bei der Herstellung der Komponenten A oder B erfolgt, übliche Zusatzstoffe in den dem Fachmann bekannten Mengen mitverwendet werden. Es seien genannt: Verstärkungsmittel, Stabilisatoren, Gleit-und Entformungsmittel, Farbstoffe und Pigmente.

Das erfindungsgemäße Verfahren beruht auf der Umsetzung der Komponente A mit B (gegebenenfalls unter Zuhilfenahme von Zusatzstoffen) in einer üblichen Mischvorrichtung bei Temperaturen von 150 bis 250°C, vorzugsweise 180 bis 220°C in Abwesenheit von Initiatoren.

Als Mischvorrichtungen sind Extruder, Kneter oder Walzen geeignet. Vorzugsweise wird ein Zweiwellenextruder der in (2) beschriebenen Art verwendet, der mit Knetelementen ausgerüstet ist.

Die Verweilzeit in der Knet-und Reaktionszone beträgt im allgemeinen 0.5 bis 30 Minuten, bevorzugt 0.7 bis 5 Minuten.

Besonders vorteilhaft ist die Durchführung des erfindungsgemäßen Verfahrens, wenn man das modifizierte Harz A in demselben Extruder, der für die Umsetzung von Komponente A mit B benutzt wird, herstellt. Dazu werden die Ausgangsstoffe $a_1$ mit den Monomeren $a_2$ bzw. $a_3$ in den Aufschmelzteil des Extruders gegeben und in der ersten Reaktionszone umgesetzt. Die Komponente B wird in Produktfließrichtung nach der ersten Reaktionszone zudosiert und mit dem Austrag aus der ersten Reaktionszone vermischt und in einer zweiten Reaktionszone umgesetzt.

Die nach dem erfindungsgemäßen Verfahren hergestellten Formmassen weisen eine Vielfalt an Eigenschaften auf und zeigen eine Reihe von Vorteilen gegenüber bisher bekannten Block-und Pfropfpolymerisaten. Sie vereinigen die Vorzüge der Mikrophasenstruktur von Blockpolymerisaten mit der Variabilität der Monomerenwahl bei den Pfropfpolymeren.

Die Verfahrensprodukte können auf herkömmlichen Maschinen durch Formblasen, Extrusion oder Spritzguß verarbeitet werden. Sie können als thermoplastische Kautschuke, Werkstoffe, Schmelzkleber, Verträglichmacher bei Polymerblens, Mineralöladditive und zur Herstellung photopolymerer Druckplatten eingesetzt werden. In Kombination mit anderen Thermoplasten können sie zur Verbesserung der Zähigkeit, der Fließeigenschaften und des Oberflächenbildes verwendet werden.

Für die Durchführung des erfindungsgemäßen Verfahrens und zur Herstellung von Vergleichsproben werden die nachstehend beschriebenen Produkte verwendet:

Komponente A

Herstellung eines Pfropfmischpolymerisates $a_1$

Durch Polymerisation von 60 Teilen Butadien in Gegenwart einer Lösung von 0,5 Teilen tert.-Dodecylmercaptan, 0,7 Teilen Kalium-$C_{14}$-$C_{18}$-Alkylsulfonat als Emulgator, 0,2 Teilen Kaliumperoxiddisulfat und 0,2 Teilen Natriumpyrophosphat in 80 Teilen Wasser wird bei 65°C ein Polybutadienlatex hergestellt. Nach Beendigung der Polymerisation wird der Polymerisationsautoklav entspannt. Der Umsatz betrug 98 %. Es wurde ein Polybutadienlatex erhalten, dessen mittlere Teilchengröße bei 0,15 µm liegt. Dieser Latex wird durch Zusatz von 25 Teilen einer Emulsion, eines Copolymeren aus 96 Teilen Ethylacrylat und 4 Teilen Acrylsäureamid mit einem Feststoffgehalt von 10 Gew.% agglomeriert, wobei ein Polybutadienlatex mit einer mittleren Teilchengröße von 0,3 bis 0,45 µm entstand.

60 Teile des erhaltenen Polybutadien-Latices wurden mit 40 Teilen einer Mischung aus Styrol und Acrylnitril (Verhältnis 70 : 30) und 50 Teilen Wasser gemischt und unter Rühren nach Zusatz von weiteren 0,1 Teilen Kaliumpersulfat und 0,2 Teilen Lauroylperoxid 4 Stunden auf 75°C erhitzt. Nach Beendigung der ersten Stufe der Propfpolymerisation wurde ohne weitere Zusatzstoffe die angegebene Menge Styrol während 3 Stunden zugegeben. Die Temperatur betrug während des Zulaufs 95°C. Nach Beendigung der Pfropfpolymerisation wurde das Produkt mittels Calciumchloridlösung bei 95°C aus der Dispersion gefällt, mit Wasser gewaschen und im warmen Luftstrom getrocknet.

Herstellung des nichtmodifizierten Harzes $A_1$

50 Teile Pfropfmischpolymerisat $a_1$ und 50 Teile einer Hartkomponente, nämlich eines Styrol/Acrylnitril (65/35)-Copolymerisates mit einer VZ = 80 ml/g (0,5 %ig bei 23°C in DMF), werden miteinander im Extruder abgemischt und granuliert.

Herstellung des modifizierten Harzes $A_{11}$

Danach werden 98,5 Teile $A_1$ und 1,5 Gew.-% Glycidylmethacrylat in einem Zweischneckenextruder (Typ ZSK 53) der Fa. Werner & Pfleiderer dosiert und in einem ersten Teil unter Verwendung von Knetelementen bei 180°C aufgeschmolzen, anschließend in einem zweiten Teil unter Kneten und Verwendung von zurückfördernden Knetelementen bei 200°C umgesetzt und anschließend in einer Entgasungszone bei 180°C durch Anlegen von Vakuum entgast. Die mittlere Verweilzeit im Extruder beträgt 4 Minuten, die Drehzahl 150 Hertz. Die austretende Schmelze wird durch ein Wasserbad geleitet und granuliert ($A_{11}$).

Produkt $A_2$

Es wurde, wie unter $a_1$ bzw. $A_1$ beschrieben, gearbeitet, jedoch mit dem Unterschied, daß 1.5 Gew.-Teile Glycidylmethacrylat (GMA) bei der Herstellung der Hülle des Pfropfmischpolymerisates verwendet werden. Es wurden somit 50 Teile Pfropfmischpolymerisat, hergestellt aus 30 Teilen Polybutadienlatex, 20 Gew.-Teilen Styrol/Acrylnitril (65/35) plus 1.5 Gew.-Teilen Glycidylmethacrylat in wäßriger Dispersion, gefällt und getrocknet und mit 50 Teilen Hartkomponente S/AN gemäß ($A_1$) im Extruder gemischt.

Produkt $A_3$

Es wurde, wie unter $a_1$ bzw. $A_1$ beschrieben, verfahren, mit dem Unterschied, daß 1.5 Gew.-Teile GMA in der Hartkomponente vorhanden sind. Es wurden somit 50 Teile Pfropfmischpolymerisat gemäß $A_1$ und 50 Teile Hartkomponente S/AN/GMA (63.5 Teile S, 35 Teile AN, 1.5 Gew.-Teile GMA) gemäß $A_1$ im Extruder gemischt.

Produkt $A_4$

Es wurde, wie unter $a_1$ beschrieben, verfahren, mit dem Unterschied, daß zur Herstellung der Pfropfgrundlage 98 Gew.% n-Butylacrylat und 2 Gew.% Dicyclopentadienylacrylat (DCPA) verwendet wurden. Daran schlossen sich die Pfropfung, die Herstellung des nichtmodifizierten Harzes und dessen Umsetzung mit GMA an, wie unter $A_1$ bzw. $A_{11}$ beschrieben.

Produkt $A_5$

Dieses Produkt entspricht in der Herstellung dem von $A_2$, mit der Ausnahme, daß bei der Herstellung von $a_1$ 98 Gew.-% n-Butylacrylat und 2 Gew.-% DCPA (anstelle von Butadien) verwendet wurde. Übereinstimmend ist die Verwendung von GMA in der Hülle.

Komponente B

Produkt $B_1$

Styrol wird in Toluol mit sek.-Butyllithium anionisch polymerisiert, so daß man ein $\overline{M}_w$ = 15.000 erhält. Das noch lebende Anion in Lösung wird mit einem großen Überschuß von $CO_2$ versetzt, die Lösung mit gasförmiger Salzsäure behandelt, filtriert und eingedampft. Man erhält ein Polystyrol mit einer -COOH-Endgruppe.

Produkt $B_2$

Es wird, wie unter $B_1$ beschrieben, verfahren, mit der Ausnahme, daß das lebende Anion mit $H_2O$-feuchtem Toluol langsam versetzt wird. Man erhält ein Polystyrol mit einer H-Endgruppe, welches nicht koppeln kann.

Die Erfindung wird durch die nachfolgenden Beispiele und Vergleichsversuche näher erläutert. Die darin genannten Teile und Prozente beziehen sich, sofern nicht anders angegeben, auf das Gewicht. Dasselbe gilt auch für die vorstehend bereits beschriebene Herstellung von Ausgangsprodukten $A_{11}$, $A_2$, $A_3$, $A_4$, $A_5$, $B_1$ und $B_2$.

Beispiele 1 bis 6 und Vergleichsversuche I bis VII

Die in der Tabellle genannten Ausgangsprodukte $A_{11}$ bis $A_5$ wurden mit den Komponenten $B_1$ bzw. $B_2$ auf einem Zweischneckenextruder bei 210° und 3 Minuten Verweilzeit umgesetzt. Es zeigt sich, daß die modifizierten Polymeren A die beanspruchte Komponente B weit besser an sich koppeln können, als es bei

den Vergleichsprodukten der Fall ist.

Zur Bestimmung der Koppelung wird feingemahlenes Granulat der erhaltenen Reaktionsprodukte 1 %ig in Tetrahydrofuran gegeben. Man erwärmt unter $N_2$ 1 Stunde auf 30°C, filtriert und bestimmt von dem Filtrat ein GPC. Die im Filtrat befindliche Menge wird in Prozent ungekoppelt angegeben im Vergleich (Beispiel Nr. 1) zu einer Probe des Vergleichsversuches I, bestehend aus einer Mischung von $A_1$ (ABS-Polymer ohne GMA) und $B_2$ (PS-Polymer ohne funktionelle Endgruppe). Alle Proben enthalten zur GPC-Auswertung zum Vergleich 20 Gew.% eines anionisch hergestellten Polybutadiens mit $\overline{M}_w$ = 5.800 (hergestellt analog $B_2$).

**Tabelle**

| Beispiel | Produkt A Menge | Produkt A Art | Produkt A Basis | Produkt B Menge | Produkt B Art | % ungekoppelt bezogen auf B |
|---|---|---|---|---|---|---|
| 1 | 40 | $A_{11}$ | (ABS) | 40 | $B_1$ | 15 |
| 2 | 40 | $A_{11}$ | " | 60 | $B_1$ | 24 |
| 3 | 75 | $A_{11}$ | " | 25 | $B_2$ | 8 |
| 4 | 55 | $A_{14}$ | (ASA) | 45 | $B_1$ | 19 |
| 5 | 40 | $A_{14}$ | " | 60 | $B_1$ | 26 |
| 6 | 65 | $A_{14}$ | " | 35 | $B_1$ | 14 |
| Vergleichsversuche | | | | | | |
| I | 60 | $A_1$ | (ABS) | 40 | $B_2$ | 100 |
| II | 60 | $A_1$ | " | 40 | $B_1$ | 96 |
| III | 60 | $A_{11}$ | " | 40 | $B_2$ | 93 |
| IV | 60 | $A_{12}$ | " | 40 | $B_1$ | 78 |
| V | 60 | $A_{13}$ | " | 40 | $B_1$ | 62 |
| VI | 55 | $A_{14}$ | (ASA) | 45 | $B_2$ | 92 |
| VII | 55 | $A_{15}$ | " | 45 | $B_1$ | 68 |

I = Bezugssubstanz = 100

## Ansprüche

1. Verfahren zur Herstellung einer thermoplastischen Formmasse, enthaltend, jeweils bezogen auf A + B,

A 2 bis 98 Gew.% eines modifizierten thermoplastischen Harzes

B 98 bis 2 Gew.% einer polymeren Komponente

durch Umsetzung der Komponente A mit B in einer üblichen Mischvorrichtung bei Temperaturen von 150 bis 250°C in Abwesenheit von Initiatoren, Abkühlen und Gewinnung des Wertproduktes, dadurch gekennzeichnet, daß als modifiziertes thermoplastisches Harz A das Umsetzungsprodukt aus

$a_1$) 80 bis 99,95 Gew.%, bezogen auf A, eines nitril-und phenylgruppenhaltigen Copolymerisates als Basispolymerem

und

$a_2$) 0,05 bis 20 Gew.%, bezogen auf A, einer $\alpha,\beta$-ungesättigten Dicarbonylverbindung

oder

$a_3$) 0,05 bis 20 Gew.%, bezogen auf A, mindestens eines ethylenisch ungesättigten Monomeren mit mindestens einer Epoxid-und/oder Hydroxidgruppe oder eines Gemisches dieser Monomeren

und als polymere Komponente B ein durch anionische Polymerisation erzeugtes, mindestens eine funktionelle (reaktionsfähige) Gruppe aufweisendes thermoplastisches Homo-oder Copolymerisat verwendet wird.

2. Verfahren zur Herstellung einer thermoplastischen Formmasse, enthaltend, jeweils bezogen auf A + B,

A 20 bis 80 Gew.% eines modifizierten thermoplastischen Harzes

B 80 bis 20 Gew.% einer polymeren Komponente

durch Umsetzung der Komponente A mit B in einer üblichen Mischvorrichtung bei Temperaturen von 150 bis 250°C in Abwesenheit von Initiatoren, Abkühlen und Gewinnung des Wertproduktes, dadurch gekennzeichnet, daß als modifiziertes thermoplastisches Harz A das Umsetzungsprodukt aus

$a_1$) 80 bis 99,95 Gew.%, bezogen auf A, eines nitril-und phenylgruppenhaltigen Copolymerisates als Basispolymerem

und

$a_2$) 0,05 bis 20 Gew.%, bezogen auf A, einer $\alpha,\beta$-ungesättigten Dicarbonylverbindung

oder

$a_3$) 0,05 bis 20 Gew.%, bezogen auf A, mindestens eines ethylenisch ungesättigten Monomeren mit mindestens einer Epoxid-und oder Hydroxidgruppe oder eines Gemisches dieser Monomeren

und als polymere Komponente B ein durch anionische Polymerisation erzeugtes, mindestens eine funktionelle (reaktionsfähige) Endgruppe aufweisendes thermoplastisches Homo-oder Copolymerisat verwendet wird.

3. Verfahren zur Herstellung einer thermoplastischen Formmasse, enthaltend, jeweils bezogen auf A + B,

A 30 bis 70 Gew.% eines modifizierten thermoplastischen Harzes

B 70 bis 30 Gew.% einer polymeren Komponente

durch Umsetzung der Komponente A mit B in einer üblichen Mischvorrichtung bei Temperaturen von 150 bis 250°C in Abwesenheit von Initiatoren, Abkühlen und Gewinnung des Wertproduktes, dadurch gekennzeichnet, daß als modifiziertes thermoplastisches Harz A das Umsetzungsprodukt aus

$a_1$) 80 bis 99,95 Gew.%, bezogen auf A, eines nitril-und phenylgruppenhaltigen Copolymerisates als Basispolymerem

und

$a_2$) 0,05 bis 20 Gew.%, bezogen auf A, einer $\alpha,\beta$-ungesättigten Dicarbonylverbindung

oder

$a_3$) 0,05 bis 20 Gew.%, bezogen auf A, mindestens eines ethylenisch ungesättigten Monomeren mit mindestens einer Epoxid-und/oder Hydroxidgruppe oder eines Gemisches dieser Monomeren

und als polymere Komponente B ein durch anionische Polymerisation erzeugtes, mindestens eine funktionelle (reaktionsfähige) Endgruppe aufweisendes thermoplastisches Homo-oder Copolymerisat verwendet wird.

4. Verfahren nach Anspruch 1, dadurch gekennzeichnet, daß als Komponente $a_1$ des modifizierten thermoplastischen Harzes ein Styrol-und Acrylnitril enthaltendes Basispolymeres verwendet wird, das durch einen gepfropften Butadien-oder Acrylatkautschuk schlagzäh modifiziert ist.

5. Verfahren nach Anspruch 4, dadurch gekennzeichnet, daß das Basispolymere, bezogen auf 100 Gew.-Teile desselben, 60 bis 140 Gew.-Teile des gepfropften Kautschuks enthält, wobei dieser aufgebaut ist aus 20 bis 70 Gew.% einer Pfropfgrundlage (Kautschuk) und 30 bis 80 Gew.% einer Pfropfhülle und wobei die Pfropfhülle, bezogen auf diese, 60 bis 80 Gew.% Styrol und 20 bis 40 Gew.% Acrylnitril aufweist.

6. Verfahren nach den Ansprüchen 1 bis 5, dadurch gekennzeichnet, daß $a_2$) eine Verbindung der allgemeinen Formel I

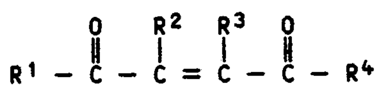 I

worin

$R^1$, $R^4$ -OH, -O-$C_1$-$C_{25}$-Alkyl, -O-$C_7$-$C_{25}$-Aralkyl, -O-Aryl, -$NR^5R^6$ oder

$R^2$ gemeinsam -O-oder -$NR^5$-,

$R^3$ -H, oder, wenn $R^3$ -H ist, Chlor, -$C_1$-$C_{25}$-Alkyl oder Aryl,

$R^5$, -H, oder, wenn $R^2$ -H ist, Chlor, -$C_1$-$C_{25}$-Alkyl oder Aryl,

$R^6$ -H, -$C_1$-$C_{25}$-Alkyl, $C_7$-$C_{25}$-Aralkyl oder Aryl, bedeuten, die ihrerseits durch $C_1$-$C_4$-Alkyl-oder -Alkoxygruppen substituiert sein können, ist.

7. Verfahren nach den Ansprüchen 1 bis 6, dadurch gekennzeichnet, daß die Komponente B aus Homo- oder Copolymerisaten von Butadien und oder Isopren einerseits oder aus Copolymerisaten dieser Diene mit Styrol oder ausschließlich aus Polystyrol aufgebaut ist, mittlere Molekulargewichte im Bereich von 1 000 bis 2 000 000 aufweist und wobei die (Co)Polymerisate als funktionelle Endgruppe bevorzugt Carboxylgruppen der Formel

$-COOM$

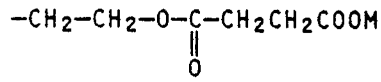

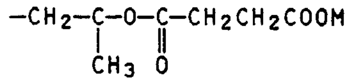

besitzen, in denen M steht für: H, $NH_4$, Na, K, Li, Ca, Mg, vorzugsweise für H.

8. Verfahren nach den Ansprüchen 1 bis 5, dadurch gekennzeichnet, daß das mindestens eine Epoxidgruppe tragende Monomere $a_3$ zusätzlich zu der Struktureinheit

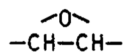

mindestens eine Vinylbenzol-, Acryloyl-, Methacryloyl-, Acrylamido-oder Methacrylamidogruppe im Molekül enthält.

9. Verfahren nach den Ansprüchen 1 bis 6, dadurch gekennzeichnet, daß das eine Hydroxigruppe tragende Monomere $a_3$ eine Verbindung der allgemeinen Formel II

$CH_2 = CR^7\text{-F-OH}$ II

ist, wobei

$R^7$: Wasserstoff oder $C_1$-$C_{25}$-Alkyl und

F 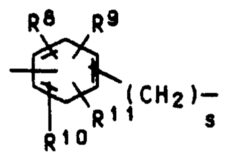 , 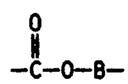 , 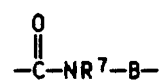 ,

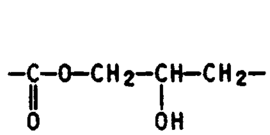 oder 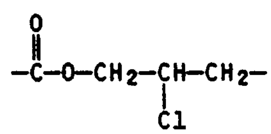 ,

$R^8$ bis $R^{11}$: Wasserstoff, $C_1$-$C_8$-Alkyl, Halogen, CN,

s: eine ganze Zahl von 0 bis 6 und

B: ein Brückenglied ist.

10. Formmasse, hergestellt nach dem Verfahren gemäß Anspruch 1.

11. Formteile aus Formmassen gemäß Anspruch 10.